(19) **Europäisches Patentamt**
**European Patent Office**
**Office européen des brevets**

(11) **EP 1 613 937 B1**

(12) **EUROPEAN PATENT SPECIFICATION**

(45) Date of publication and mention
of the grant of the patent:
**19.12.2007 Bulletin 2007/51**

(51) Int Cl.:
*G01K 1/14* (2006.01)     *G01K 1/16* (2006.01)

(21) Application number: **04727596.1**

(86) International application number:
**PCT/GB2004/001620**

(22) Date of filing: **15.04.2004**

(87) International publication number:
**WO 2004/092696 (28.10.2004 Gazette 2004/44)**

(54) **THERMOMETER**

THERMOMETER

THERMOMETRE

(84) Designated Contracting States:
**AT BE BG CH CY CZ DE DK EE ES FI FR GB GR HU IE IT LI LU MC NL PL PT RO SE SI SK TR**

(30) Priority: **15.04.2003 GB 0308682**
**12.11.2003 GB 0326318**

(43) Date of publication of application:
**11.01.2006 Bulletin 2006/02**

(73) Proprietor: **Kinsler, Peter**
**Abingdon, OX14 1DS (GB)**

(72) Inventor: **Kinsler, Peter**
**Abingdon, OX14 1DS (GB)**

(74) Representative: **Teuten, Andrew John**
**Sagittarius Intellectual Property Consultants Ltd**
**Taylor House**
**39 High Street**
**Marlow, Bucks. SL7 1AF (GB)**

(56) References cited:
**EP-A- 0 332 355          US-A1- 2002 191 673**

Printed by Jouve, 75001 PARIS (FR)

**Description**

The present invention relates to the field of thermometers for measuring the temperature of the liquid contents of containers, particularly bottled liquids, such as wine.

Various types of thermometers are known in the prior art to measure the temperature of liquids, such as wine, directly, and display the result in various ways to facilitate reading temperature ranges, or optimal temperatures for different types of liquid. Examples are US 3,124,003, and US 4,104,916.

Although thermometers of the type described exist in the prior art, they possess a number of disadvantages undesirable in such devices. For instance, in measuring wine temperature the bottle would be opened just prior to serving to insert a thermometer into the wine thus risking contamination.

Wine connoisseurs know that the temperature of wine can make a considerable difference to taste and enjoyment and some vineyards are responding by listing the correct temperature on new labels. The importance of temperature of service is highlighted by the internationally-acclaimed wine expert Jancis Robinson in her book "Jancis Robinson's Wine Course" [ISBN: 1-85613-360-5] where she states, "It is impossible to overestimate the effect of serving temperatures on how a wine will taste." Serving wine too cold reduces its aroma and flavour, and highlights any bitterness. Serving the wine too warm can make the flavours unpleasantly dull and flat and the wine seem harshly alcoholic. Any wine is best drunk within a temperature range of 2-3 C°. For example very good Burgundy reds should be drunk at 15-16 °C, whereas very good Bordeaux reds require 17-18 °C. Optimal serving temperatures for wines are well known to the skilled person.

The process of withdrawing the cork at the time of serving and immersing a conventional thermometer into the wine to check its temperature is unsatisfactory, because if it is determined that the wine is not at the correct temperature, it is too late to compensate by heating or cooling the bottle.

Even if there is time for further iterations of heating or cooling the bottle and measuring the temperature to establish whether the wine is at the correct serving temperature, each time the temperature of the wine is measured, the bottle must be opened, the thermometer stem must be inserted to measure the temperature of the wine, and the bottle must be re-closed after the temperature measurement. It is not only inconvenient, but time-consuming to repeat this temperature-measuring sequence several times for a single bottle of wine. In addition, if this is done for an effervescent wine, such as champagne, it is even more troublesome, as several iterations of temperature measurement could result in the loss of effervescence when the wine is eventually served.

It would be advantageous to use a means of measuring liquid (particularly wine) temperature without opening the container first.

US 3,864,976 discloses a liquid crystal strip or band thermometer that may be attached to the side of a bottle with an elastomeric strip. US 4,538,926 discloses such a wine thermometer with a single liquid crystal composition that changes colour with temperature and a comparison band with which the colour can be compared. A symbol in the comparison band indicates the exact temperature for serving the wine in the bottle to which the device is attached. US 5,738,442 similarly pertains to thermometers for the measurement of wine temperature just prior to serving.

Using the liquid crystal technology above, the patch that constitutes the wine thermometer must be tightly attached adhesively to the side of the bottle exterior. Although the temperature inside the bottle can be roughly estimated without disturbing the wine, such patches can be unsightly on the bottle, and may be difficult to remove neatly.

WO 88/03512 discloses a contact-type thermometer for the side of the bottle. Contact-type thermometers are known, such as the Minimum Surface Thermometer manufactured by Testo. However these thermometers (and the patch thermometer) suffer from the disadvantage of having to remove the bottle from the fridge or incubator to test the temperature of the liquid contents. Even if the temperature could be observed within the fridge or incubator with these methods, the accuracy of the thermometer can be significantly affected by being exposed not only to the container surface temperature, but also to the extreme ambient temperature of the fridge or incubator.

US 2002/0191673 discloses a clamp that can be releasably attached (i.e. clamped) around the cylindrical outer surface of a wine bottle. A temperature probe is positioned on the inside of the clamp, such that it is pressed against the wine bottle when the clamp is attached thereto. The measured wine temperature is presented on a display.

EP 0 332 355 A2 discloses a nursing bottle with a concave base. A temperature sensor is placed within the concave base for measuring the content of the bottle. The cavity is thermally insulated when the bottle is placed onto a support means comprising the sensor.

The present invention aims to alleviate the above problems by presenting a device that can measure the temperature of the contents of a container such as a wine bottle without disturbing the contents, but which can constantly monitor the temperature of the contents and signal the occurrence of the desired temperature of the container contents without having to remove the container from the fridge or incubator, and wherein the thermometer accuracy is not significantly affected by the extreme temperatures of the fridge or incubator.

The inventor has found that for containers with concave bases (such as wine bottles which typically have a conical or generally frustro-conical space in their base), the space in the base can be advantageously used to estimate the temperature of the liquid contents of the container. Such concave bases have a large surface area projecting into the liquid which allows a good thermal exchange between the liquid and the air space enclosed in the base of the container.

Thus according to the invention there is provided a device for externally estimating the temperature of the liquid contents of a (preferably sealed) container (particularly glass containers such as wine bottles) with a concave base, comprising a support means with at least one contacting portion for contacting the concave base of said container (preferably at its perimeter) such that a space is enclosed (preferably thermally enclosed) by the concave base and the support means, a temperature probe which is positioned within the support means such that in use the probe may measure the temperature within the enclosed space, and a suitable system for receiving temperature information from the temperature probe and displaying the estimated temperature of the liquid contents within the container (without the container having to be opened beforehand).

By "externally" it is meant that a temperature is measured outside the container. By "estimating" it is meant that the techniques of this invention are capable of providing a temperature measurement which is a good approximation of the average temperature of the internal liquid contents (i.e. the temperature of the contents after having been mixed by shaking) of the container (preferably within 2 C°, most preferably within 1 C°). By "displaying the estimated [or approximate] temperature of the liquid contents" it is meant that the estimated temperature is displayed and/or the temperature information is used to display or indicate that the desired temperature of the liquid contents has been reached. By "concave base" it is meant that the container has a base which is internalised back into the container, thus an air pocket or cavity or space (typically an air space) is present between the container's external surface and the plane perpendicular to the rim of the base of the container (into which the temperature probe of the invention may be placed). The concave base is typically a dome or cone or generally frustro-cone shape - as for wine bottles. Typically, the extent to which the base is internalised is 0.5-4 cm from the plane perpendicular to the rim of the base of the container (which is the case for most wine bottles - one of the shallowest cavities being a German Riesling bottle, and one of the deepest the Condrieu bottle from the Northern Rhône). Although "concave base" is referred to throughout, it is envisaged by the inventor that although a conventional standing surface of the container is preferred, the term can equally refer to any suitable concave region of a container that protrudes (or is internalised) into its liquid contents which defines an internalised space capable of being enclosed by the device of the invention. By "support means" it is meant that means are provided capable of stabilising the container in the device (or the device within the container) so that i) the weight of the bottle is supported to some extent and/or ii) the container (or device) is stabilised to some degree to prevent excessive movement within the device (or container).

It is not essential that the space within the base is thermally sealed by the contacting portion of the support means. If the container's contents are being cooled in the device placed in a fridge and the temperature probe is projected towards the top of the concave space (and the container is in a substantially vertical position) the probe will measure the temperature of the less dense air (warmed by the contents of the container) trapped in the concave space which will reflect the temperature of the liquid contents (see methods of the invention).

It is, however, preferred that the contacting portion of the support means is capable of contacting the base of the container such that the space between concave base of the container and the support means is enclosed such that it is thermally insulated (or enclosed) from the ambient temperature outside the space, for instance that of the fridge, freezer or incubator into which the device may be placed. By "thermally enclosed [or insulated]" it is meant that i) a system is substantially thermally isolated in the space between concave base and support means, and/or ii) that movements of air between the enclosed space and the outside environment are reduced (and preferably minimised) - i.e. the space is substantially (or totally) draft-free. In the context of a wine bottle, small ridges are often present on the base of the bottle; however by placing the wine bottle on a flat surface, although small channels may connect the internal space with the external environment, the space within the concave base is nonetheless sufficiently thermally-enclosed for the purposes of this invention. The contacting portion may contact any suitable surface on the concave base to enclose a space between support means and base, for instance it may take the form of a cup around the temperature probe the rim of which contacts a circumference of the concave base. Advantageously the contacting portion contacts the perimeter of the concave base of the container (most preferably the majority or the entirety of the perimeter). In this way the space within the concave base can be readily enclosed, and the support means / contacting portion may usefully provide a platform onto which the base of the container may stand or be supported.

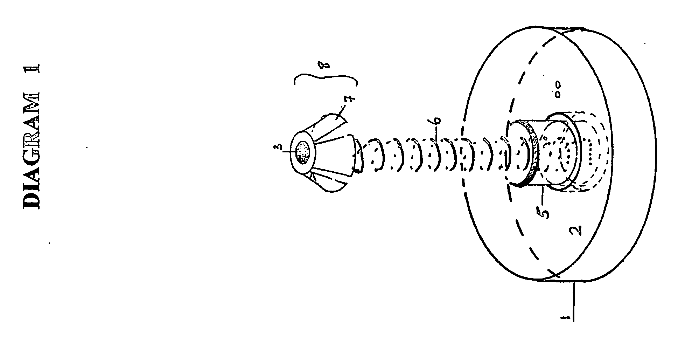

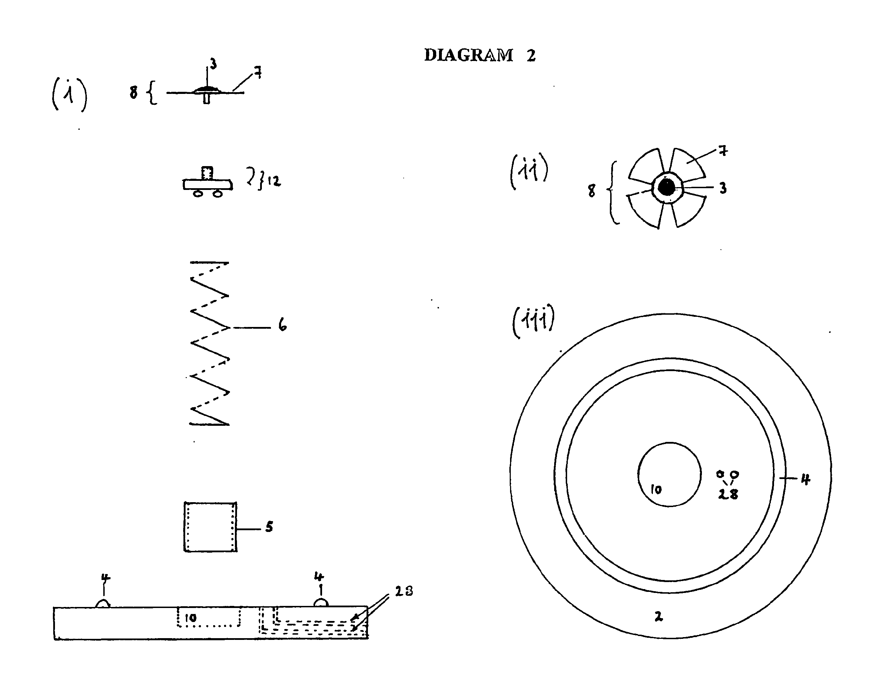

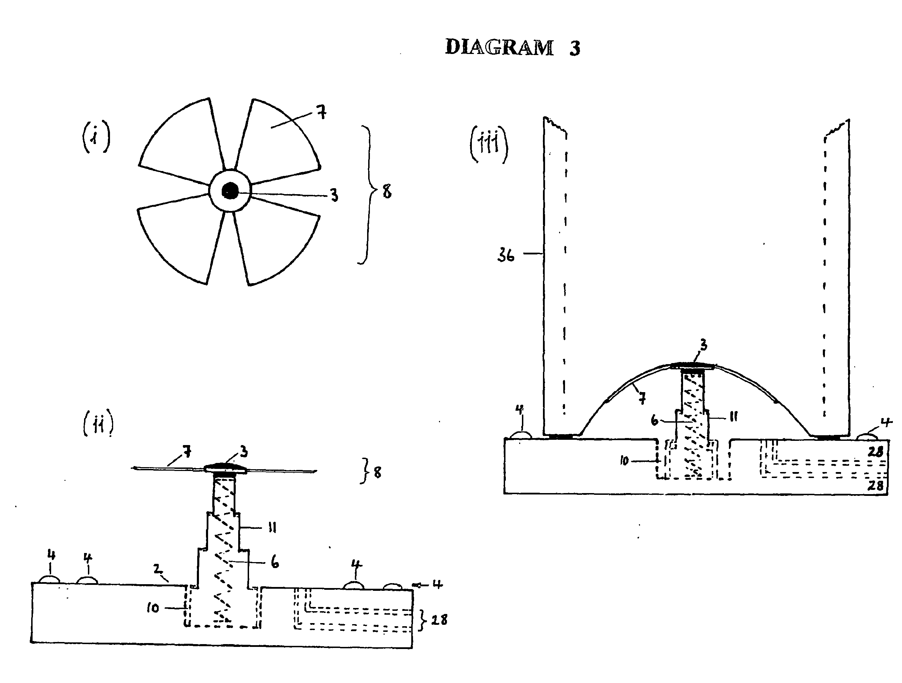

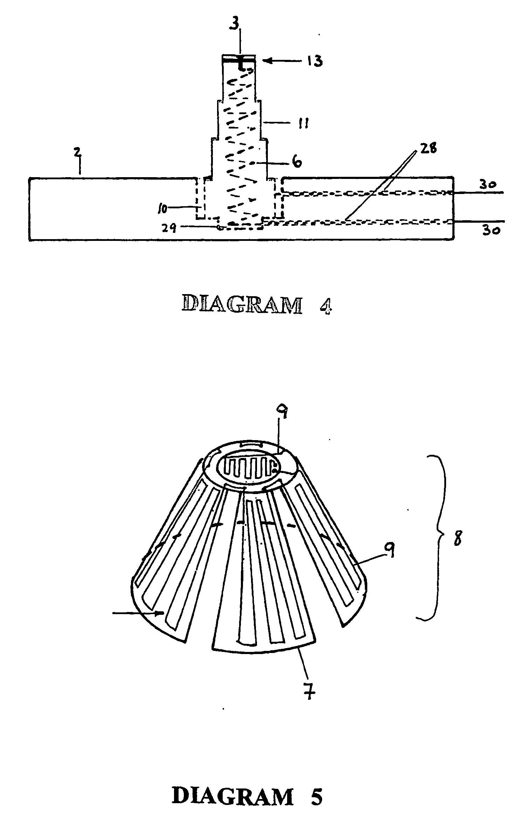

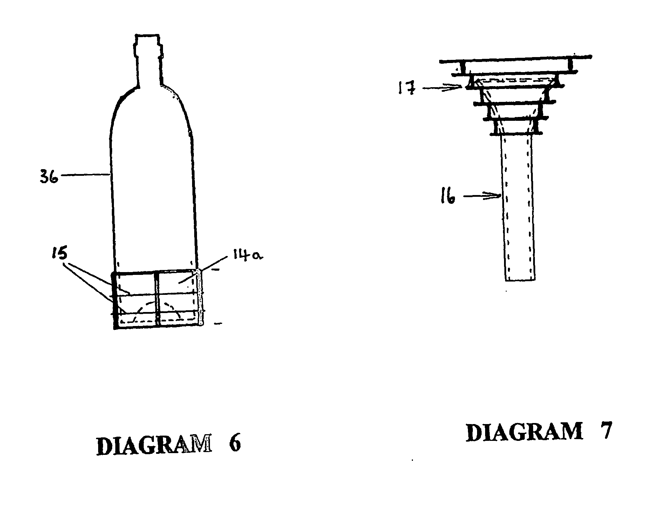

Preferably, the contacting portion of the support means is made of a thermally insulating, deformable material such as rubber. It is also preferable that the support means (or at least the portion of it defining the enclosed space in the base of the container) is also made of thermally insulating material. In one embodiment, the contacting portion may be of a wide enough diameter to accommodate (preferably by making contact with the base rim) all various standard size containers or bottles. In addition, it is preferred that the contacting portion forms a raised ridge projecting from the support means such that, when a container is placed upon it, it may deform around and make contact with any uneven surface around the concave base of the container (preferably at its perimeter). For instance, in a further embodiment the contacting portion may form an O-ring on the surface of the support means for containers with round bases, such as wine bottles. Wine bottles frequently have uneven gripping raised surfaces on their base perimeter, and such a contacting portion allows the deformable material to contact the whole perimeter of the base for good thermal insulation of the enclosed base space. Most preferably, the device can have 2 or more (e.g. 3, 4, or 5) concentric contacting portions suitable for contacting base perimeters of various sizes of container (see for example Diagrams 2 and 3). Again, for wine bottles, various concentric O-rings can be of a diameter to accommodate the various diameters of wine bottles (e.g. one small enough for half bottles of wine, one, two or three for various standard size wine bottles (e.g. Alsace, Burgundy and Bordeaux), and one to fit larger based wine bottles such as champagne bottles).

Preferably the support means of the device should also comprise a guide portion for guiding the placement of the base of the container onto the temperature probe and/or the contacting portion of the support means. Most preferably, the guide portion should be thermally insulating. For wine bottles the guide portion could constitute a generally cylindrical sleeve into which a wine bottle can be placed so that it will come into contact with the contacting portion and/or be optimally placed for the temperature probe to estimate the temperature of the contents of the bottle through its base space. Such a cylindrical sleeve (or guide portions in general) may be expandable to accommodate differently sized bottles (or containers) - such expansion preferably being concentric to the contacting portion of the support means. Most preferably the cylindrical sleeve (or guide portions in general) should be resiliently biased to a non-expanded position. A cylindrical sleeve (or guide portions in general), for example, may be longitudinally divided in two halves which are resiliently biased towards each other. The cylindrical sleeve (or guide portions in general) is preferably slightly flared where the bottle enters the device in order to facilitate the expansion of the guide portion. Alternatively the guide means could accommodate the neck of a container - such as a bottle. In a particular embodiment, the guide portion is detachable. This is particularly of use in free-standing devices where the guide portion may impede the placement of cooling sleeves such as the Vacuvin Rapid Ice® for cooling bottles.

The temperature probe can constitute any convenient means of measuring the temperature within the concave space. The term "probe" indicates a "sensor" for the purposes of this invention. Preferably, the device has an electronic temperature probe which is connected to suitable electronics for measuring and displaying, in use, the approximate temperature of the liquid contents of the container. An electronic temperature probe can be any known device for instance a resistance thermometer, thermistor or, preferably, a thermocouple. Thermocouples are well known in the art, and typically comprise a first and a second metal (preferably copper and constantan, or Nickel and Nickel/Chromium alloy respectively). One junction of the metals is present in the base space of the container in use, and the other junction of the metals in the circuit is typically placed at a reference temperature (for instance a zero degree Celsius box found in many fridges). The voltage difference resulting from the two junctions at different temperatures is readily converted electronically to give the temperature reading at the base of the container which is conveniently shown on the display of the device. Display electronics can also (or alternatively) employ several other features such as an alarm function for alerting the user when the desired temperature has been reached. There may also be a programmable function for entering the type of contents enclosed in the container which is associated in the memory with a particular serving temperature at which an alarm may operate or sound. For instance ideal serving temperatures of various types of wine can be entered into the memory of the device which can be selected by the user of the device so that the alarm can indicate optimal serving temperature has been reached without the user having to know themselves what this temperature is. The display can also show when the temperature of the contents are above or below the optimal range of temperature for the contents. In addition, using the rate of temperature drop or increase in the liquid contents of the container, the electronics could work out an approximate time for the contents to reach the desired temperature which could provide useful information for the user.

Typically the temperature measured in the concave space is a good approximation of the average temperature of the liquid contents of the container (usually within 2 (e.g. 1-2) Celsius degrees, most preferably within 1 Celsius degree). However, where this is not the case, a skilled person can readily calibrate external measurements with internal average readings. Preferably the device of the invention is activated by means of a pressure switch either within the support means or the temperature probe when a bottle is placed on the device.

In one embodiment the device has a temperature probe which in use projects from the support means into the space enclosed by the concave base of the container and the support means, preferably through an elongate projecting means. Preferably the elongate projecting means is positioned such that, in use, it projects the temperature probe towards the centre (or apex) of the concave base of the container (or towards the top of the space enclosed within the concave base). Most preferably, the temperature probe is positioned such that in use it is in thermal contact with the surface of the concave base of the container. This has the advantage of using both the air temperature in the concave space and the contact temperature of the container (at a point which is protruding into the container's contents) for estimating the internal content temperature. Ideally the temperature probe would be in contact with the container at the top of the concave space (for instance at the apex of the cone or frustro-cone of the base of a wine bottle).

In an example, the device need not have support means H with a contacting portion, and may comprise merely a temperature probe which, in use, projects from the device through an elongate projecting means within the space in the concave base of the container (and is preferably positioned such that, in use, it projects the temperature probe towards the centre of the concave base of the container) and support means (which need not contact the perimeter of the base of the container) for holding the container in position for the temperature measurement to take place. The container may rest on a substantially rigid temperature probe/elongate projection means for support, or the support means could retain the container in place either at the top, side or bottom of the container maintaining the temperature probe either in thermal contact with the concave base of the container, or simply extending towards the top of the cavity space. Preferably the container is retained in a substantially vertical position. It is therefore not essential (though again preferred) in this embodiment that the base cavity is thermally insulated from the ambient temperature of the fridge or incubator into which the device is placed. For instance, if the container's contents are being cooled in the device placed in a fridge and the temperature probe is projected towards the top of the concave space (and the container is in a substantially vertical position) the device will measure the temperature of the less dense air warmed by the contents of the container enclosed in the concave space which will reflect the temperature of the liquid contents.

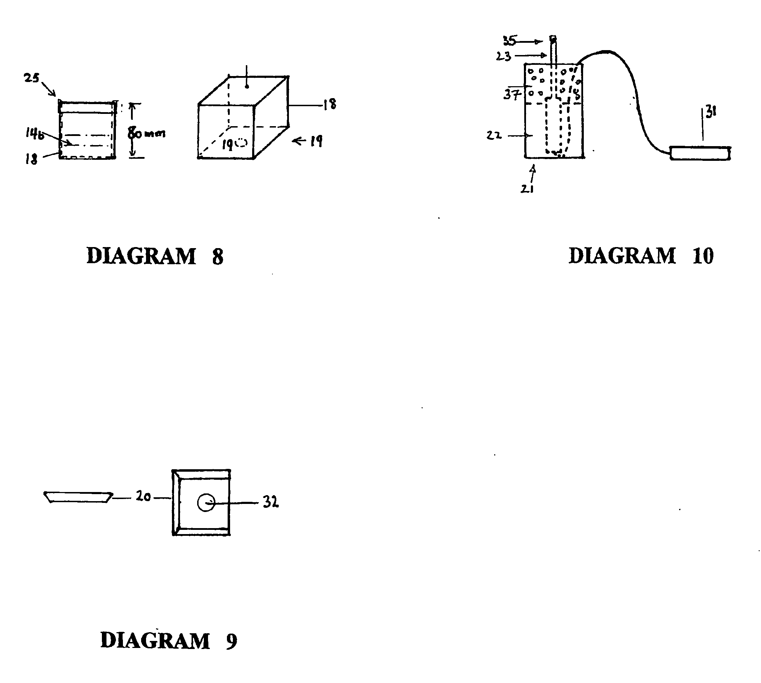

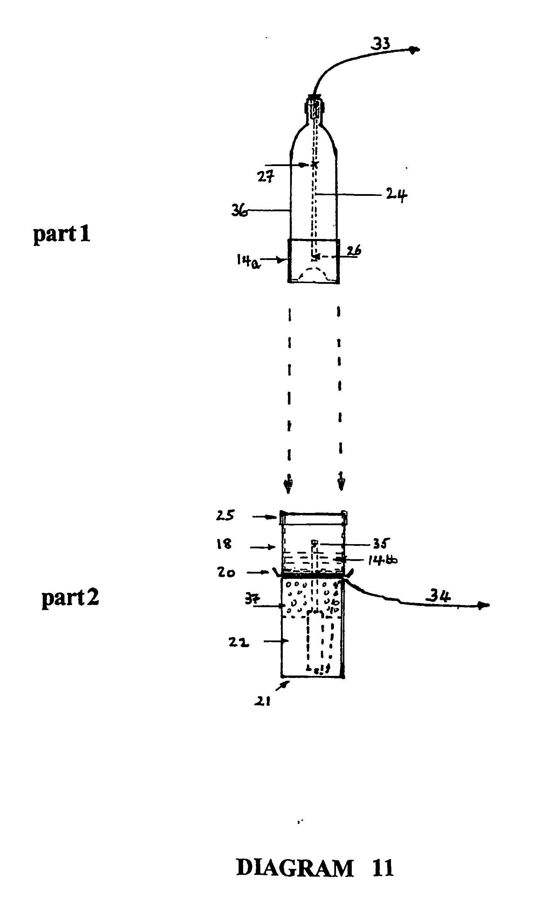

Depending on the shape of the centre of the concave base of the container, the temperature probe may or may not be of the correct size to contact the container if it is extended in use to the top of the concave space. In an example therefore, the temperature probe in use is in thermal contact with the surface of the concave base of the container through at least one flexible extension made of a material with good thermal conductivity which preferably extends substantially laterally from (and therefore in thermal contact with) the temperature probe. These flexible extensions are typically flat sheets of metal such as phosphor bronze or copper which can contact a portion of the internal concave area (preferably towards the centre or apex) of the base of the container. This has the advantage of making the thermal transfer between the concave base of the container (protruding into the liquid contents of the container) and the temperature probe particularly efficient. If the temperature probe is a thermocouple, the flexible extensions should be ideally made of one of the metals forming the thermocouple to which they are connected (preferably copper). Most preferably the flexible extension is made of a resilient sheet of metal. If such a sheet extends laterally (or radially or transversely) from the temperature probe, the concave base of the container when placed on the temperature probe will tend to bend the flexible extension into a shape with good thermal contact with the concave base; when removed from the device the flexible extension should ideally restore itself to its original shape. Preferably there should be more than 1 (e.g. 2, 3 or 4) such flexible extensions, most preferably extending symmetrically from the temperature probe. See Diagrams 1, 2, 3 for examples of temperature probes with such flexible extensions 7. In addition to flexible extensions being applied to thermocouple temperature probes, the same idea may also be applied to resistance thermometer or thermistor-based temperature probes. See for example Diagram 5 showing such a flexible extension principle for a resistance thermometer probe which leads to an increase in the sensitivity of the probe due to the increased length of wire **9**. In some circumstances a resistance thermometer or a thermistor-based thermometer may be more readily used than a thermocouple as a reference temperature is not required (although resistance/thermistor thermometers need to be calibrated before being fitted to a device).

Preferably the elongate projecting means is longitudinally compressible by application of the container to the device. This allows the temperature probe to be in thermal contact with the container regardless of the depth of the cavity (concave base space) of the container used. Typically, the support means provides a stop to compression. The elongate projecting means may be capable of compressing to the level of the exterior surface of the support means which, in use, defines the space enclosed by the concave base of the container and the support means - that is, the compressed elongate projecting means might sit in a pocket built into the surface of the support means. It may therefore collapse below the surface of the rim of the contacting portion of the support means. In a preferred embodiment the elongate projecting means is telescopically arranged.

The compressed elongate projecting means may be compressed by application of the container to the device, and, once the container is removed, the elongate projection means is manually extended for the next container to be measured. Most preferably, the device of the invention has elongate projecting means that is resiliently biased towards the concave base of the container. In such case the elongate projecting means can take the form of a coiled spring (see, for example, **6** in Diagram 1) which is most preferably supported or maintained in an upright orientation through a spring guide means (see, for example, **5** in Diagram 1). The elongate projecting means preferably is a resiliently biased telescopic arrangment (see, for example, **11** in Diagrams 3 and 4). The strength of the bias should be readily determinable by a skilled person, but should typically not be so strong that the weight of a filled container cannot compress the elongate projecting means (although of course embodiments are envisioned where manual pressure could compress the system, however in such instance further retaining means would be required to hold the container stably in place e.g. against the surface of the support means).

Preferably the temperature probe is thermally insulated from the support means and/or the elongate projecting means (see, for example, **12** in Diagram 2).

In an example the elongate projecting means integrally comprises a first electrical conduit connecting the temperature probe with suitable electronics for measuring and displaying, in use, the temperature of the contents of the container. This has space saving advantages in that loose wires are avoided. Alternatively, or in addition, if the elongate projecting means is longitudinally compressible by application of the container to the device and is biased towards the concave base of the container through resilient biasing means, these biasing means could be electrically insulated from the elongate projecting means, and could integrally comprise a second electrical conduit connecting the temperature probe with suitable electronics for measuring and displaying, in use, the temperature of the contents of the container. Again this has space saving advantages in that loose wires are avoided. See, for example, Diagram 4 where the electrical conduits (or wires) contacting the junctions of a thermocouple are 1) the elongate projecting means (preferably telescopic) and 2) the resilient biasing means themselves. In such case the electrical conduits should be made from the same first and second metals as the first and second metals to which they are electrically attached in the thermocouple, respectively, said metals being optionally selected from copper and constantan (or other suitable pairs of metals such as nickel and nickel/chromium alloy).

Preferably the device of the invention is arranged such that in use the container is placed vertically on the support means, wherein gravity allows the perimeter of the base of the container to contact the contacting portion of the support means. Alternatively the device may be arranged such that in use the container is placed horizontally on the support means, wherein the device further comprises retaining means for keeping the base of the container (e.g. at its perimeter) in thermally insulating contact with the contacting portion of the support means. Such a retaining means may constitute a simple collar around the neck of a wine bottle for maintaining the base of the bottle in contact with the support means (i.e. by exerting a force on the wine bottle towards the contacting portion of the support means). Retaining means may also constitute merely placing the container such that the central axis of the container is at a small angle above the horizontal. Horizontal (or substantially horizontal) placement of bottles in a device of the invention may be advantageous where the device is present in a freezer or in a wine-rack of a fridge, for instance, where horizontal placement of bottles is most convenient.

The device of the invention may be typically used for externally estimating the temperature of the liquid contents of a bottle, such as a wine bottle. The device of the invention may be free standing such that it can be moved from one environment to another (or simply used at room temperature). This has the advantage that the device may be easily cleaned, and that it may be integrated into means for transporting containers such as wine bottles. The device may also be integrated within a machine that can cool or warm the liquid contents of a container. For instance, the device is preferably fitted to a cooled incubator (such as a fridge or freezer), or heated incubator. Alternatively, the container may be cooled on a free-standing device using a cooling sleeve such as the Vacuvin Rapid Ice® for cooling the contents of wine bottles. White wines will typically need cooling from room temperature to their appropriate serving temperature range (encompassed within the range 4-14 degrees Celsius). Equally some red wines might need to be cooled from room temperature to temperatures in the range 10-18 degrees Celsius. Red wines will typically require warming from cellar temperature (around 10 degrees Celsius) [as will certain white wines] to their appropriate serving temperature range (encompassed within the range 10-18 degrees Celsius). A comprehensive list of optimal serving wine temperature ranges could be provided with the device of the invention - either on a card or fridge magnet, or even programed into memory within the device which could be selected manually or through a remote control.

It is preferred in the devices or methods of the invention that where cooling containers/bottles is concerned, any alarm should be set at the bottom end of the desired serving temperature range. This is advantageous in terms of the accuracy of the device, and also in terms of retaining the contents at an optimal temperature for longer once they are removed from the cooling apparatus into a serving vessel at ambient temperature. In fact, for the above reasons it may be desirable for the alarm to be set slightly below (i.e. 1-2 C°) the bottom of the desired range.

A method of externally estimating the temperature of the liquid contents of a container is further provided by this invention comprising the steps of placing a container comprising liquid contents onto the device of the invention or onto the device of the invention fitted to a fridge, freezer, or heated incubator, and measuring the estimated temperature. Furthermore, there is provided a method of decreasing the temperature of the liquid contents of a container to a particular temperature at or above the ambient temperature of a fridge or freezer (or cooled incubator) comprising the steps of placing the container onto the device of the invention fitted in a fridge or freezer (or cooled incubator), measuring the decrease of temperature in the liquid contents of the container, and removing the container from the fridge or freezer (or cooled incubator) when the particular temperature has been reached. Last, the inventor provides a method of increasing the temperature of the liquid contents of a container to a particular temperature at or below the ambient temperature of a heated incubator comprising the steps of placing the container onto the device of the invention fitted in a heated incubator, measuring the increase of temperature in the liquid contents of the container, and removing the container from the heated incubator when the particular temperature has been reached.

A method of externally measuring the temperature of the liquid contents of a container with a concave base is also provided comprising the steps of inserting a temperature probe into the space (typically air space) within the concave base of the container and measuring the temperature as an estimation of the temperature of the liquid contents of the container. Preferably the temperature probe is a thermocouple, a thermistor or a resistance thermometer. Preferably the temperature probe is inserted into the space within the concave base of the container to an extent that it makes thermal contact with the surface of the container (most preferably at the apex of the concave base). In addition, it is preferable if the method further comprises the step of thermally enclosing (or insulating) the space in the concave base of the container into which the temperature probe is sited, preferably by thermally enclosing (or insulating) the space (either a part of it, or more preferably the whole space) within the concave base of the container from the ambient temperature of the system (external to the space). Preferably a device of the invention is employed in such a method. Again the container may be in a substantially vertical or horizontal orientation when the temperature estimation is made. It is also preferable that a short delay is employed in the method before an estimation of the internal content's temperature is made which is sufficient to allow the temperature measured at the base of the container to approach the average internal temperature of the contents (i.e. within 4 C°, preferably within 3, 2 or 1 C°). This allows the device to stabilise after the initial transients (see graph 1 and graph 2 for examples of each type of transient).

Although all the previous embodiments have been focused on the advantageous use of the concave base of the container to estimate the internal content temperature, other examples using the principles of the above invention may be envisaged. For instance, the device of the invention could measure the temperature at the side (or any surface) of a filled container (or bottle) without being affected by the ambient temperature surrounding the container if the device comprises a temperature probe (as described above) which in use is in thermal contact with the container, but the probe, in addition, is thermally insulated from the ambient external temperature. This may be done by having an insulated cup around the probe with contacting edges that contact the container around the perimeter of the rim of the cup thus thermally insulating the system (preferably comprising an air space) but allowing the probe to make contact with the external surface of the container within the system. The temperature, or change of temperature, measured may be relayed to the user as described above. Thus a device for externally estimating the temperature of the liquid contents of a container is also provided comprising a temperature probe (connected to a suitable system for displaying the estimated temperature of the liquid contents within the container) and thermal insulating means (preferably made of flexible rubber) surrounding said probe comprising a contacting surface, which is arranged so that, in use, a container's external surface may be positioned in thermal contact with the temperature probe and also making contact with the contacting surface of the thermal insulating means such that the temperature probe is thermally insulated from the ambient temperature external to the thermal insulating means. The space between the container's external surface and the thermal insulating means (containing the temperature probe) is thus insulated from the external ambient temperature. A retaining means (such as a sprung Jubilee clip) may optionally be added to the above device to maintain the container in thermal contact with the temperature probe and in contact with the thermal insulating means (the temperature probe and thermal insulating means may be fitted within (but thermally insulated from) such retaining means). Cooling incubators (fridges/freezers) and warming incubators fitted with the above device are further provided, as are methods of using the above device in estimating the temperature (or change in temperature) of the liquid contents of the container.

Clearly devices measuring the temperature at the concave base of containers are preferred, however, as they advantageously allow a wider range of differently-shaped containers to be readily fitted in the device given the flat external base perimeter of most containers. Also the external surface of the container at the base may be more readily thermally isolated from the rest of the container (exposed to ambient temperature conditions) than other areas of the container's external surface.

A container fitted to the device of the invention is a further example of the invention.

The invention will now be described in greater detail, by way of illustration only, with reference to the accompanying (not to scale) diagrams, wherein:

**Diagram 1** is a schematic representation of the concave base of bottle thermometer showing the principle parts consisting of a base plate **1** with a contacting surface **2,** which is shown as a cylinder but could be of any suitable shape, a compression spring **6** set into the base plate **1,** a probe head **8** complete with a thermocouple **3** and vanes **7** in the "in use" position (as if a bottle were placed on the device). The probe head **8** is metallic so as to have high thermal conductivity and needs to be elastic in order to maintain good thermal contact with the apex of the cone at the base of the bottle. The spring **6** and thermocouple **3** should be of low thermal conductivity in so far as this is consistent with their roles. The spring guide **5** and the base plate **1** are good thermal insulators. The following are not shown: O-ring seals, thermocouple wires, an insulating spring-probe head connector, and display unit.

**Diagram 2** consists of three parts

i) an exploded view of the different component parts shown in Diagram 1 along with an insulating spring-probe head connector **12** and showing connection channels **28** linking probe head **8** to display means (wires and display means are not shown), and the spring guide 5 which sits in a pocket **10** in the base plate **1**
ii) a plan view of the probe head **8** and
iii) a plan view of the base plate **1** showing the use of an O-ring **4** which needs to be a good thermal insulator and relatively narrow to reduce the thermal flow into the base plate **1.**

**Diagram 3** shows an alternative design for the base of bottle thermometer and consists of three parts,

i) a top view or plan view of the probe head **8** with thermocouple **3** and vanes **7** made of copper or phosphor bronze.
ii) an equatorial cross-sectional side view of the device including a spring-loaded telescope **(6** and **11)** and
iii) an equatorial cross-sectional side view of the device loaded with a bottle **36** and showing the compression of the O-ring seals **4,** the flexing of the vanes **7** of the probe head **8** and the spring loaded telescopic action of the device.

**Diagram 4** is a preferred option which shows an equatorial cross-sectional view of the device which is a spring-loaded telescope which doubles up as a thermocouple. Copper vanes (not shown) would be preferred. At least a part of the external telescope **11** would need to be continuous copper up to the junction. The spring **6** is made of the second material making up the thermocouple **3**. The thermoelectric properties of spring steel (in the spring **6)** with copper (in the telescope **11)** could be examined. Nickel and/or Nickel/Chromium alloy could replace either or both. The thermal insulator **13** along with a recess **29** within the pocket **10** centres the spring part of the thermocouple. Output leads **30** to the display system are shown passing through connection channels **28**.

**Diagram 5** is a schematic representation of a probe head **8** in vane **(7)** shape as before but incorporating a resistor formed by a long thin wire **9**. The external connections are not shown. This device would perhaps need to be encapsulated in some protective material. This probe head **8** would be interchangeable with the probe heads 8 shown in Diagams 1, 2 and 3.

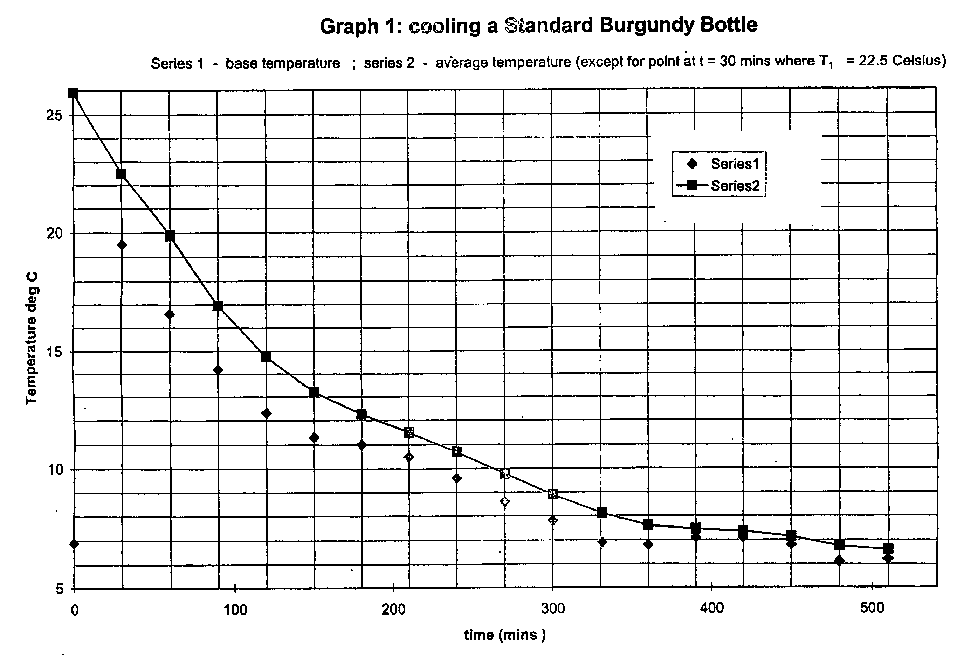

**Diagrams 6-11** are with respect to the apparatus used to examine the utility of the device of the invention, wherein:

**Diagram 6** is a side view showing the cotton wool insulation **14a** which is attached to the bottom portion of a bottle **36** to a height of 75 mm with elastic bands **15.**

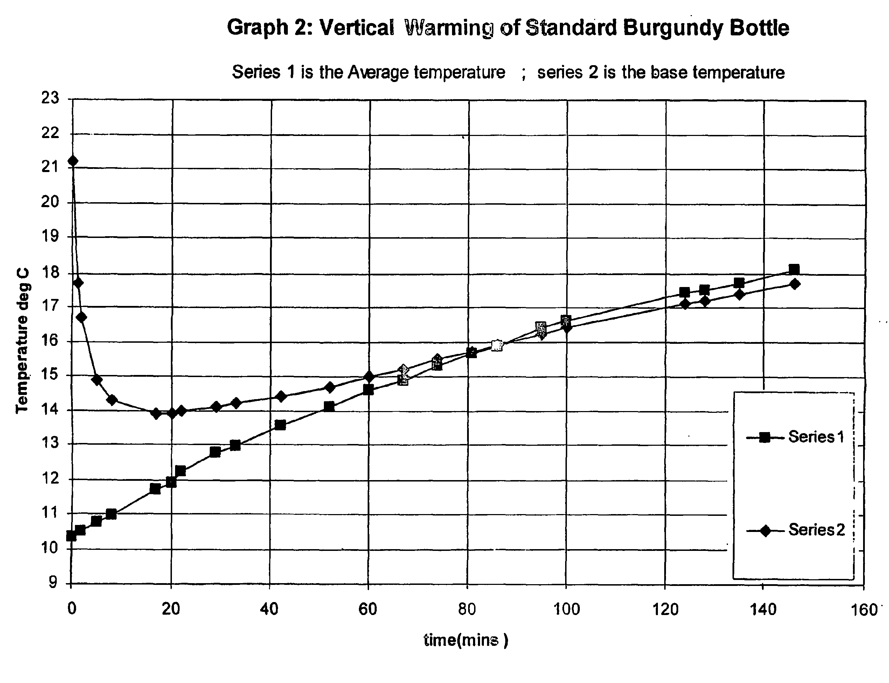

**Diagram 7** shows a side view of the thermometer guide for the neck of the bottle. It is in two parts; one in the shape of a flared hollow tube **16** which is held within the other part, a flexible rubber stopper **17.**

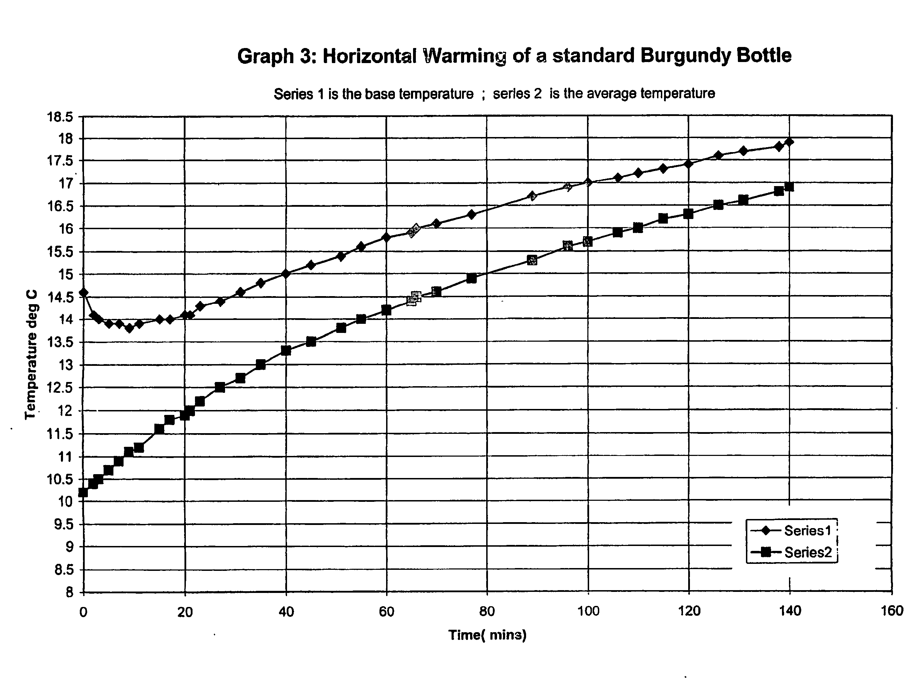

**Diagram 8** shows side and schematic views of a plastic box **18** (80 mm tall x 120 mm x 120 mm) with a small hole **19** in the base to accommodate the basal air thermometer **23**. The box **18** is lined with aluminium foil **25.** Typically the box **18** is about 1/2 full of cotton wool **14b.** Foil **25** and cotton wool **14b** only shown in side view.

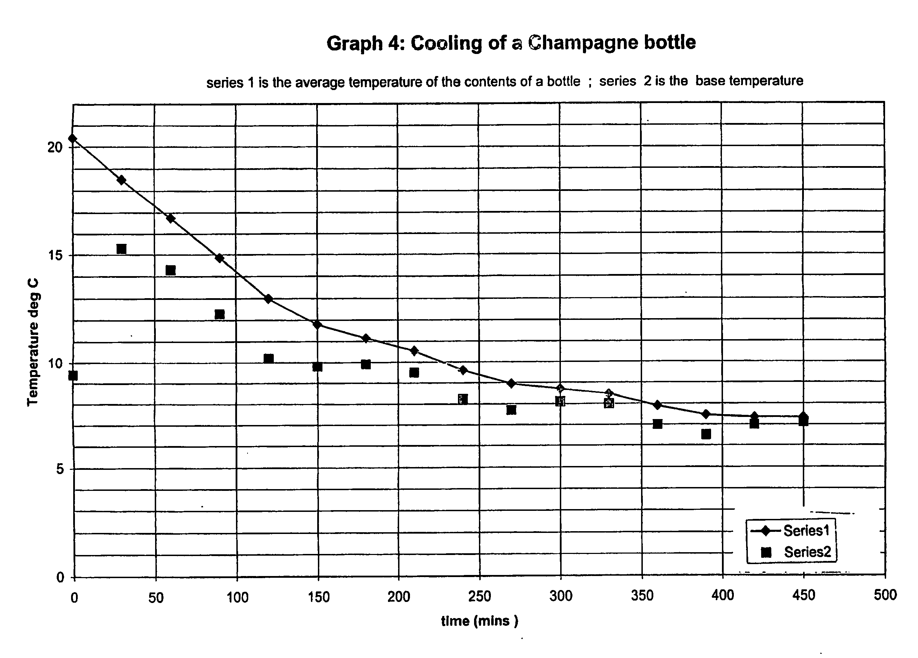

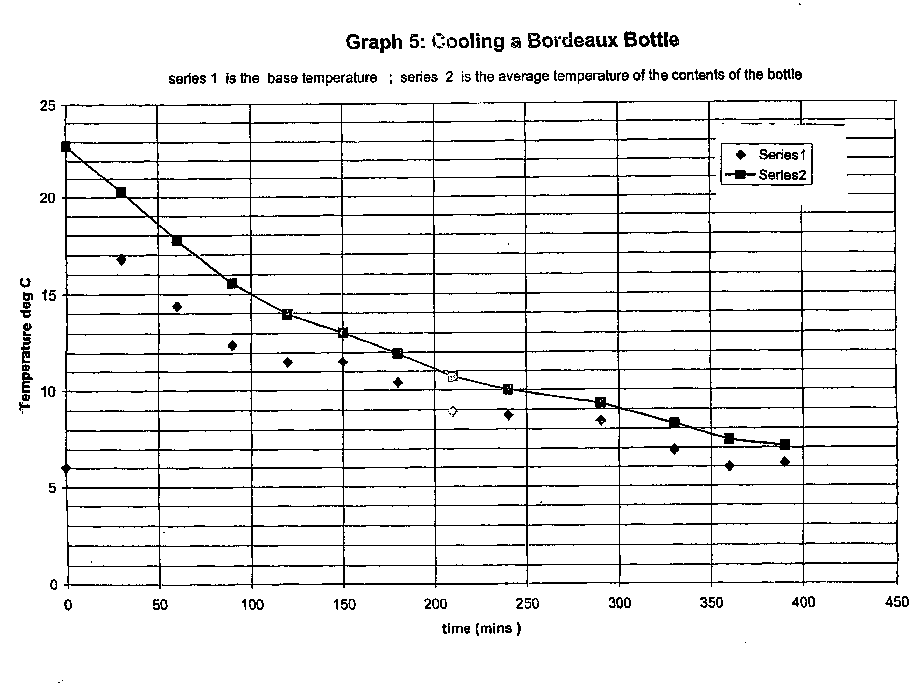

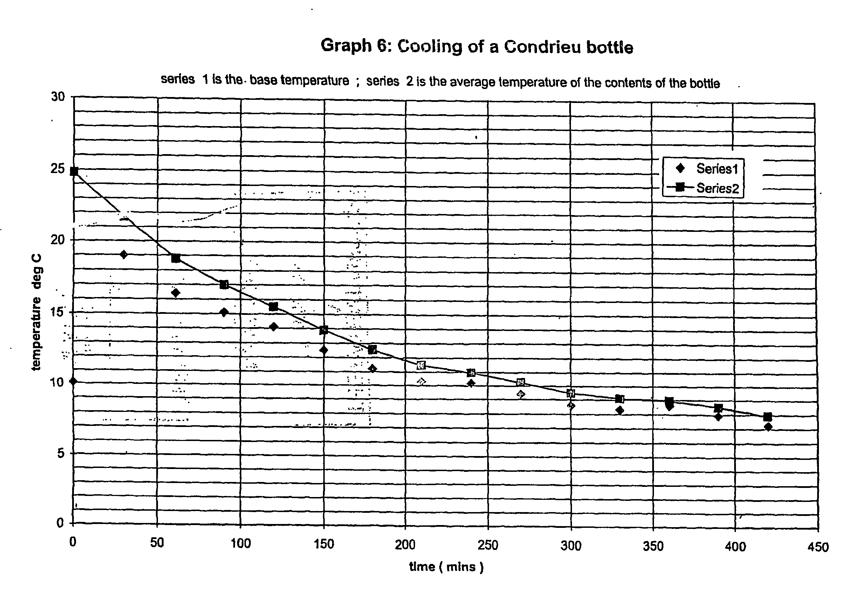

**Diagram 9** shows side and plan views of a tray **20** which serves to position the plastic box **18** mentioned in diagram 8 on the glass beaker **21** shown in diagram 10 (see Diagram 11). The hole **32** in the tray is aligned with the hole **19** in the box **18** of Diagram 8.

**Diagram 10** shows a side view of a glass beaker **21** packed with paper **22** and cotton wool **37** to keep the basal air thermometer probe **23** in a vertical orientation. The sensor **35** of the air thermometer probe **23** (5 mm from the tip of the probe **23)** is connected to a digital display means **31.**

**Diagram 11** is in two parts. Part 1 shows a side view of a bottle **36** equipped with insulation **14a,** and an immersion thermometer **24** which is 20 cm long and having a sensor 5 mm from the tip with output lead **33** to digital display means (not shown). Measurements of temperature are taken at 2 positions in the bottle **36;** temperature-measuring (sensor) positions 1 **(26)** and 2 **(27),** position 2 **(26)** being directly above position 1 **(27).** Part 2 shows a side view of the elements, itemised in diagrams 8, 9 and 10, when they are assembled together. Output lead **34** connects the sensor **35** of the air thermometer probe **23** (5 mm from the tip of the probe **23)** to a digital display means (not shown). Part 1 is lowered into Part 2 to complete the measurement apparatus.

**Examples of different types of device of the invention**

**1** Free standing battery operated device for use in the door of a fridge as in Diagrams 1, 2, 3 and 4.
The device is portable so that it can be taken to the table with a chilled bottle. The temperature is shown on a digital display. An alarm built into the device indicates when the set temperature has been reached.
**2** Idem but the device is built into the fridge and is supplied by an internal rectified dc supply voltage. In addition, the temperature display system and the alarm are mounted externally on the fridge door housing.
In use the wine bottle **36** is placed vertically onto the device in the fridge door and presses down onto the probe **8** which is maintained in good thermal contact with the top of the cone of the base by means of a spring **6** and the elastic nature of the probe head **8.** The probe head **8** consists of a thermocouple **3** or other temperature sensing device embedded in a sheet of phosphor bronze cut in a vane **7** shape as shown in diagram **2.** The phosphor bronze is flexible and hinged such that it will fold down under the weight of the bottle **36** but maintain contact with the bottle **36.** It has good thermal conductivity, being metallic and will assist in achieving an accurate reading of the temperature of the base of the bottle **36.**

The bottle **36** sits on an O ring 4 of good elasticity (Diagram 2 and 3) such as the rubber used for Vacuvin stoppers or washing machine seals. A partial seal is therefore formed by the action of the weight of the bottle **36** on the O ring 4. The O ring **4** is embedded in a thermally and electrically insulating base plate **1** which serves to accommodate the spring loaded thermometer probe. The surface **2** of the base plate **1** is large enough to accommodate bottles **36** up to and including Champagne bottles. The diameters of the O rings 4 correspond to the roughened areas at the bottom of the respective bottles 36. The spring constant may be of the order of 3-4 N/cm.

Flexible electrical connections from the probe (not shown) are led through the spring or pass by the spring and through the base plate **1** to a display unit (not shown) containing electronics capable of working to +/- 0.5 °C or better. The device starts at the ambient temperature of the fridge door (not shown) but warms up at first when a bottle **36** is placed on it and then cools as the fridge cools the bottle **36** and contents. The air at the top of the air space rapidly attains the temperature of the bottom of the bottle **36,** while the higher density cold air from the fridge will sit just above the base plate **1.**

**3** Free standing battery operated device [as in Diagrams 1, 2, 3 or 4] for use in monitoring the temperature of a bottle 36 taken from a cellar at say 10°C as it warms up. As with the previous devices this is also equipped with an indicator of when a preset temperature has been reached. This device may operate in a room temperature environment or in a heated incubator (not shown).

In the first two examples an initial transient occurs which results in the device warming at first when a bottle **36** is placed on it. It then indicates a falling temperature as the fridge cools the bottle **36** and its contents. In the third example the opposite is observed. The device starts at room temperature and then cools initially when the bottle **36** is placed on it. Thereafter, it indicates a rising temperature as the bottle **36** and contents warm up.

All of these devices are activated by means of a pressure switch (not shown) within the base plate **1** when a bottle **36** is placed on the plate **1.**

A first series of experiments for these devices, which will be described in detail in the next section, suggest that there is a good correlation between the temperature measured externally at the base of a wine bottle and the average temperature of the contents in the ranges 13 - 18 °C for a wanning bottle and 13.5 - 6 °C for a bottle being cooled.

<u>**A first series of experiments**</u>

**1 Introduction :**

The important serving temperature ranges for white wines and certain reds that need chilling are 2 or 3 Celsius degree intervals lying between 14 and 4 °C. This must form the basis of the required accuracy of any wine thermometer.

A useful specification for a device designed to estimate the average internal temperature of a bottle of wine by external measurement would be that the external temperature reading should lie within 2 C° of the actual average internal temperature and preferably it should be better than this.

A first series of experiments to assess the correlation between the temperature measured in the basal cone space of the bottle (the external temperature) and the average internal temperature of the contents of a bottle has been done and this is described in what follows.

**2 Basic parameters for a first series of experiments**

| Situation 1 : | Cooling a standard Burgundy bottle vertically in a fridge door. |
|---|---|
| Situation 2 : | Warming a standard Burgundy bottle vertically from approximately 10°C, as for a bottle taken from a cellar. |
| Situation 3 : | Warming a standard Burgundy bottle horizontally from approximately 10 °C, as for a bottle taken from a cellar. |
| Situation 4 : | Cooling other bottles vertically in a fridge door. |

**3 A description of the first series of experiments (with reference to the apparatus shown in Diagram 11)**

In a first series of experiments an air thermometer probe **23** was used in the basal cone space of the bottle **36** to measure the external temperature of the wine bottle **36**. An immersion thermometer **24** was used to measure the average temperature of the contents of the bottle **36.**

**3.1 APPARATUS :**

    i) A standard Miele fridge (K 1541 S-6) set at a control setting of about **2.1**;
    ii) various empty wine bottles **36** filled with tap water and left to come into thermal equilibrium with their surroundings;
    iii) two calibrated Testo AG 110 thermometers with system accuracy of $\pm 0.4°C$

        a) a 200mm immersion thermometer **24**
        b) an air space thermometer **23;**
        the active device is within 5 mm of the end of each probe;

    iv) insulating materials, e.g. cotton wool **14a 14b;**
    v) support means **(14b** and 18 in part2 of Diagram 11) for the bottle **36.**

**3.2 Procedure for Situation 1: cooling a standard Burgundy bottle vertically in a fridge door**

The bottle **36** is wrapped around its lower portion with 75mm squares of cotton wool **14a,** which are held in place with elastic bands **15** as indicated in diagram 6. There are typically 4 squares of cotton wool **14a** used, sometimes eight, and occasionally a layer of aluminium foil (not shown) is placed between the layers of cotton wool **14a.** The bottle **36** is then filled up with tap water and left to stand until in thermal equilibrium with its surroundings.

The open neck of the bottle **36** is partially closed with a rubber stopper **17,** which, along with a cylindrical plastic piece **16,** serves as a guide and holder for the immersion thermometer **24** (see diagram 7). The immersion thermometer **24** is put in position through the holder and typically rests in place such that the measuring sensor is approximately 2 cm above the top of the basal cone in the bottle (position 1 [**27**]). The air thermometer **23** is arranged to stand vertically in a glass beaker **21** packed with paper **22** and cotton wool **37** as in diagram 10.

A small insulating tray **20** with a central hole **32** (diagram **9**) is placed over the air thermometer probe **23** and rests on the glass beaker **21.** The tray **20** serves as a support for the plastic box **18,** lined with Aluminium foil **25** and 1/2 full of cotton wool **14b** (diagram 8), which is mounted on top of the tray **20** with the air thermometer probe **23** projecting into the space just above the cotton wool **14b** in the box **18.**

The combination of beaker **21,** tray **20** and box **18** along with the air temperature measuring probe **23** (diagram 11 part 2) is placed in the lowest available shelf in the door of the fridge. After waiting for 1 hour to allow this apparatus to stabilise thermally in the fridge the insulated bottle **36** equipped with its immersion thermometer **24** (diagram 11 part 1) is placed in the box **18,** any obvious holes in the insulation **(14a** and **14b)** are filled with small amounts of cotton wool. The position of the air temperature probe **23** is arranged such that contact (however slight) is made between the tip of the probe end and the bottom of the bottle **36** when the two parts are assembled. Effectively, the bottle **36** sits just below the central part of the door of the fridge.

A cooling experiment is now ready to be done.

**3.3 Measurements :**

Temperature measurements are taken as the bottle **36** cools. The temperature of the water in the bottle **36** is measured at position 1 **(27),** the lowest immersion point, and at position 2 **(26)** (150 mm below the top of the bottle **36** as in diagram 11 part 1). The temperatures at these positions are designated $T_1$ and $T_2$, respectively. The basal temperature $T_B$ is measured with the air probe **23.** $T_1$ and $T_B$ are taken by direct measurement on opening the fridge door and $T_2$ is then taken by raising the probe **24** to a standard position and after waiting 10 seconds for temperature stabilisation.

An average:

$$\overline{T} = \frac{T_1 + T_2}{2}$$

is calculated.

Various measurements have shown that this procedure arrives at an average value of the temperature in the bottle 36, which is accurate within a few tenths of a degree Celsius.

**3.4 Procedure for Situation 2: warming a bottle vertically from approximately 10°C, as for a bottle taken from a cellar.**

The same apparatus is used as for situation 1. The bottle **36** is first cooled in the fridge and allowed to warm up until its temperature is about 10°C. Typically the bottle **36** will be shaken to average out any temperature distributions in the liquid in the bottle **36** before starting the warm up. The air probe apparatus (part2 of diagram 11) is sitting on a table at room temperature when the chilled bottle **36** is placed into the box **18.** As before, the temperatures at the two basic positions designated above as $T_1$ and $T_2$ are taken along with the temperature $T_B$ at the base of the bottle **36.**

**3.5 Procedure for Situation 3: warming a bottle horizontally from 10°C, as for a bottle taken from a cellar.**

As for situation 2, however the whole apparatus is laid horizontally on a table, which requires the additional use of a small amount of support for the neck and base of the bottle **36.**

**3.6 RESULTS**

Various bottles have been experimented with. Typical results for a standard Burgundy bottle of mass 530 g and cone depth of 2.9 cm are shown in Graphs 1, 2 and 3 corresponding to situations 1, 2 and 3 outlined above. These can be summarised as follows:

**3.6.1 Situation 1 as shown in GRAPH 1**

Measurements of $\overline{T}$ indicate a fairly standard cooling curve.

Measurements of $T_B$ indicate that a maximum is reached after about 20 minutes. However, its specific position is not needed and is not sought in this exercise, as this would have involved repeated openings of the fridge door. After the maximum, $T_B$ declines. The first measurement after the maximum is taken at 30 minutes. An important part of the $T_B$ characteristic is the kink or plateau which occurs about 11°C. $T_B$ remains practically constant for a period of time (more so in graphs 4, 5 and 6) during which the thermal energy being extracted from the basal airspace is practically balanced by the thermal energy passing into the space from the bottle **36** or possibly from condensation of water vapour in the airspace or a combination of both. In the meantime T continues to fall and so the difference $\overline{T}$ - $T_B$ becomes significantly smaller.

**3.6.2 Comment :**

The important serving temperature ranges for white wines and certain reds that need chilling are 2 or 3 Celsius degree intervals lying between 14 and 4 °C. As indicated in the introduction, a useful specification for a device designed to estimate the average internal temperature of a bottle of wine by external measurement would be that the external temperature reading should lie within 2°C of the actual average internal temperature and preferably it should be better than this. From GRAPH 1 one can see that the device meets the specification for all ranges of 2 Celsius degrees from 13. 5 °C down.

In the table which follows the integral values for $\overline{T}$ have been extracted from Graph 1 by interpolation. The corresponding values of $T_B$ at the same time have similarly been extracted. The difference $\overline{T}$ - $T_B$ is calculated and tabulated. In the final two columns the capability of the device to meet the specification for each range of 2 Celsius degrees is indicated.

| $\overline{T}$ (°C) | $T_B$ (°C) | $\overline{T}$ - $T_B$ (C°) | Range(°C) | Specification met? |
| --- | --- | --- | --- | --- |
| 14 | 11.75 | 2.25 | 14-12 | no |

(continued)

| $\overline{T}$ (°C) | $T_B$ (°C) | $\overline{T}$ - $T_B$ (C°) | Range(°C) | Specification met? |
|---|---|---|---|---|
| 13 | 11.25 | 1.75 | 13 - 11 | yes |
| 12 | 11 | 1 | 12-10 | yes |
| 11 | 9.9 | 1.1 | 11 - 9 | yes |
| 10 | 8.8 | 1.2 | 10-8 | yes |
| 9 | 7.95 | 1.05 | 9 - 7 | yes |
| 8 | 6.9 | 1.1 | 8-6 | yes |
| 7 | 6.55 | 0.45 | 7 - 5 | yes |

**NOTE:** 1 It is evident here that the airspace thermometer being used gives good to very good results for the standard Burgundy bottle. The precision of the device clearly improves as the temperature drops. It just fails to meet the specification for the first range of 14 - 12 °C but is well within 2 C° for all other ranges. It is expected that these results could be improved upon by using an external thermometer in good contact with the base of the bottle.

2 The alarm to indicate the arrival at the correct serving temperature should be set at the bottom end of the desired range. In addition to benefits gained in precision, this also maximises the length of time the bottle contents remains within the desired temperature range.

3 The standard Burgundy bottle used is very similar in shape, mass and cone depth to other bottles e.g. bottles from the Loire or Rhone so that this technology will be transferable to other similar bottles.

4 It is assumed here that the results obtained with water in the bottle will not change significantly with wine in the bottle.

**5** It is worthwhile bearing in mind that it could be desirable to cool a bottle below the bottom of the required serving temperature range by 1 or 2° (1° at the higher end of the range 14 - 4°C and 2° at the lower end) in order to allow for the warming effect of the wine glass. Doing this will automatically lead to an increase in the precision of the device. It will also keep the remainder of the bottle at a satisfactory temperature for some time, if simply left on the table after the initial pouring.

**CONCLUSION :**

This device would appear to have the potential to meet a reasonable specification for a wine thermometer operating within a fridge or a cooling situation, e.g. the cooling sleeve manufactured by Vacuvin and known as Rapid Ice®.

**3.6.3 Situation 2 as shown in GRAPH 2**

When the bottle **36** is placed into the box 18 at the start of this experiment, $T_B$ falls rapidly, reaching a minimum in about 15-20 minutes, and then starts to rise as shown in GRAPH 2.

With a bottle initially at approximately 10°C:

$$\left|T_B - \overline{T}\right| \leq 0.6°C$$

in the important temperature range from 14.1 - 18.1°C which covers the serving temperatures for many red wines including the best red Burgundy and red Bordeaux.

**3.6.4 Comment** : This device is a very good indicator of the internal temperature within the bottle and the alarm to pour the bottle should be set at the bottom of the desired range. For example, for red Burgundy, the alarm should be set at the base temperature $T_B$ of 15°C (internal temperature approximately 14.6°C) so that with a little warming in the glass the wine will be at the perfect drinking temperature for red Burgundy (15 - 16°C).

**3.6.5 Situation 3 as shown in GRAPH 3**

Here the minimum is reached in 10-15 minutes.

$T_B$ - $\overline{T}$ ≤ 2° from 12.5° Cup
$T_B$ - $\overline{T}$ ≤ 1.5° from 14.9°C up
$T_B$ - $\overline{T}$ = 1° at 17 °C

**3.6.6 Comment :** The fact that $T_B$ > $\overline{T}$ can usefully be used in setting the alarm for this device. The alarm should be set to operate when $T_B$ is in the middle of the desired serving temperature range.
For example, red Bordeaux should be drunk at 16 - 18°C, so the alarm should be set for a base temperature of 17°C (when the average temperature of the contents will be 16°C) and the wine will be in perfect condition.

**Situation 4 : Cooling other bottles vertically in a fridge door**

**4.1 A champagne bottle**

The procedure was the same as for cooling the Burgundy bottle but with a relatively light amount of cotton **14a** around the base (4 cotton pads plus about a third of another). The mass of the bottle **36** was 830g and the cone depth was 3.1cm. The results are shown in GRAPH 4.

$\overline{T}$-$T_B$ ≤ 2° from 11.8°C
$\overline{T}$ - $T_B$ ≤ 1°C from 8.7°C

As vintage and other good quality Champagnes should be drunk at 8 - 10 °C this device can accurately predict when the internal temperature is in the desired range. Equally, this would also apply to non vintage champagnes which need further chilling.

**4.2 Bordeaux and Condrieu bottles**

These results are indicated in Graphs 5 and 6. The Bordeaux bottle has a mass of 530 g and a cone depth of 2.5cm. The Condrieu bottle has a large mass (830 g) and a very deep basal cone (4 cm).
The Bordeaux bottle characteristic is fairly similar to the Burgundy one. The Condrieu bottle characteristic gives the best correlation between the base temperature and the average temperature of the contents of any of the bottles because of its deep cone. It would in fact meet the specification of any of the 2 C° ranges from 14 °C down.

**5 Concluding Remarks :**

i) The comments made at 3.6.2 about the suitability of the device to give a good to very good indication of the internal temperature of a Burgundy bottle when being cooled applies equally to other bottles tested e.g. Bordeaux, Champagne and Condrieu.

ii) clearly the device could be used as a very good indicator of the internal temperature of the contents of a warming bottle.

**Claims**

**1.**   A method of externally measuring the temperature of the liquid contents of a wine bottle with a concave base comprising the steps of inserting a temperature probe into the space within the concave base of the wine bottle, thermally enclosing the space within the concave base of the wine bottle and measuring the temperature as an estimation of the temperature of the liquid contents of the wine bottle.

2. The method of claim 1, comprising the steps of inserting a temperature probe into the space within the concave base of the wine bottle to an extent that the probe makes thermal contact with the surface of the wine bottle, thermally enclosing the space within the concave base of the wine bottle and measuring the temperature as an estimation of the temperature of the liquid contents of the wine bottle.

3. The method of claim 1 or 2, wherein the temperature probe is a thermocouple, a resistance thermometer or a thermistor.

4. The method of claims 1-3, wherein the temperature probe makes thermal contact with the surface of the wine bottle at the apex of the concave base.

5. The method of claims 1-4, wherein the wine bottle is in a substantially vertical orientation when the temperature estimation is made.

6. The method of claims 1-4, wherein the wine bottle is in a substantially horizontal orientation when the temperature estimation is made.

7. The method of claims 1-6, wherein the temperature measurement is made when the wine bottle is present within a fridge, freezer or heated incubator which has a different ambient temperature to the liquid contents of the wine bottle.

8. The method of claim 7, wherein several temperature measurements are made to follow the change of temperature of the liquid contents of the wine bottle over time.

9. A device for use in the method of any one of claims 1-8, comprising a support means with at least one contacting portion for contacting the perimeter of the concave base of said wine bottle such that a space is thermally enclosable by the concave base and the support means, and wherein the contacting portion is of a wide enough diameter to accommodate all various standard size wine bottles, a temperature probe which is positioned within the support means such that in use the probe may measure the temperature within the thermally enclosed space, and a suitable system for receiving temperature information from the temperature probe and displaying the estimated temperature of the liquid contents within the wine bottle.

10. The device of claim 9, wherein the support means comprises a detachable, thermally-insulating cylindrical sleeve for guiding the placement of the base of the wine bottle onto the contacting portion of the support means.

**Patentansprüche**

1. Verfahren zum externen Messen der Temperatur des Flüssigkeitsinhalts einer Weinflasche mit einem konkaven Boden mit den folgenden Schritten: Einführen eines Temperaturfühlers in den Raum in dem konkaven Boden der Weinflasche, thermisches Einschließen des Raums in dem konkaven Boden der Weinflasche und Messen der Temperatur als eine Schätzung der Temperatur des Flüssigkeitsinhalts der Weinflasche.

2. Verfahren nach Anspruch 1, mit den folgenden Schritten: Einführen eines Temperaturfühlers in den Raum im konkaven Boden der Weinflasche so weit, dass der Fühler mit der Fläche der Weinflasche in thermischen Kontakt tritt, thermisches Einschließen des Raums im konkaven Boden der Weinflasche und Messen der Temperatur als eine Schätzung der Temperatur des Flüssigkeitsinhalts der Weinflasche.

3. Verfahren nach Anspruch 1 oder 2, bei dem der Temperaturfühler ein Thermoelement, ein Widerstandsthermometer oder ein Thermistor ist.

4. Verfahren nach den Ansprüchen 1 - 3, bei dem der Temperaturfühler mit der Fläche der Weinflasche am Scheitel des konkaven Bodens in thermischen Kontakt tritt.

5. Verfahren nach den Ansprüchen 1 - 4, bei dem die Weinflasche im Wesentlichen vertikal ausgerichtet ist, wenn die Temperaturschätzung durchgeführt wird.

6. Verfahren nach den Ansprüchen 1 - 4, bei dem die Weinflasche im Wesentlichen horizontal ausgerichtet ist, wenn die Temperaturschätzung durchgeführt wird.

7.  Verfahren nach den Ansprüchen 1 - 6, bei dem die Temperaturmessung durchgeführt wird, wenn sich die Weinflasche in einem Kühlschrank, Gefrierschrank oder Temperaturhaltungsmittel befindet, der bzw. das eine andere Umgebungstemperatur als der Flüssigkeitsinhalt der Weinflasche hat.

8.  Verfahren nach Anspruch 7, bei dem mehrere Temperaturmessungen so durchgeführt werden, dass sie der Temperaturänderung des Flüssigkeitsinhalts der Weinflasche mit der Zeit folgen.

9.  Vorrichtung zur Verwendung in dem Verfahren nach einem der Ansprüche 1 - 8, mit einem Stützmittel mit mindestens einem Kontaktierteil zum derartigen Berühren des Umfangs des konkaven Bodens der Weinflasche, dass durch den konkaven Boden und das Stützmittel ein Raum thermisch eingeschlossen werden kann, und bei der der Kontaktierteil einen Durchmesser aufweist, der groß genug ist, allen Weinflaschen mit verschiedenen Standardgrößen Rechnung zu tragen, einem Temperaturfühler, der so in dem Stützmittel angeordnet ist, dass der Fühler im Gebrauch die Temperatur in dem thermisch eingeschlossenen Raum messen kann, und einem geeigneten System zum Empfang von Temperaturinformationen von dem Temperaturfühler und zur Anzeige der geschätzten Temperatur des Flüssigkeitsinhalts der Weinflasche.

10. Vorrichtung nach Anspruch 9, bei der das Stützmittel eine lösbare, thermisch isolierende zylindrische Hülse zum Führen der Anordnung des Bodens der Weinflasche an den Kontaktierteil des Stützmittels umfasst.

**Revendications**

1.  Procédé pour mesurer depuis l'extérieur la température du liquide contenu dans une bouteille de vin ayant une base concave, comprenant les étapes consistant à insérer une sonde de température dans l'espace dans la base concave de la bouteille de vin, à enfermer thermiquement l'espace dans la base concave de la bouteille de vin et à mesurer la température sous forme d'une estimation de la température du liquide contenu dans la bouteille de vin.

2.  Procédé selon la revendication 1, comprenant les étapes consistant à insérer une sonde de température dans l'espace dans la base concave de la bouteille de vin dans une mesure telle que la sonde arrive en contact thermique avec la surface de la bouteille de vin, à enfermer thermiquement l'espace dans la base concave de la bouteille de vin et à mesurer la température sous forme d'une estimation de la température du liquide contenu dans la bouteille de vin.

3.  Procédé selon la revendication 1 ou 2, dans lequel la sonde de température est un thermocouple, un thermomètre à résistance ou une thermistance.

4.  Procédé selon les revendications 1 à 3, dans lequel la sonde de température entre en contact thermique avec la surface de la bouteille de vin au niveau du sommet de la base concave.

5.  Procédé selon les revendications 1 à 4, dans lequel la bouteille de vin est dans une orientation substantiellement verticale lorsque l'estimation de température est faite.

6.  Procédé selon les revendications 1 à 4, dans lequel la bouteille de vin est dans une orientation substantiellement horizontale lorsque l'estimation de température est faite.

7.  Procédé selon les revendications 1 à 6, dans lequel la mesure de la température est faite lorsque la bouteille de vin est dans un réfrigérateur, un congélateur ou un incubateur chauffé qui est à une température ambiante différente du liquide contenu dans la bouteille de vin.

8.  Procédé selon la revendication 7, dans lequel on effectue plusieurs mesures de température pour suivre le changement de température du liquide contenu dans la bouteille de vin au cours du temps.

9.  Dispositif destiné à être utilisé dans le procédé selon l'une quelconque des revendications 1 à 8, comprenant un moyen de support avec au moins une portion de contact destinée à entrer en contact avec le périmètre de la base concave de ladite bouteille de vin de telle sorte qu'un espace puisse être thermiquement enfermé par la base concave et le moyen de support, et dans lequel la portion de contact a un diamètre suffisamment large pour s'adapter à toutes les bouteilles de vin diverses de taille standard, une sonde de température positionnée dans le moyen de support de telle sorte que, pendant l'utilisation, la sonde puisse mesurer la température dans l'espace thermiquement enfermé, et un système approprié pour recevoir les informations de température de la sonde de température et pour afficher la température estimée du liquide contenu dans la bouteille de vin.

10. Dispositif selon la revendication 9, dans lequel le moyen de support comprend un manchon cylindrique détachable thermiquement isolant pour guider le positionnement de la base de la bouteille de vin sur la portion de contact du moyen de support.

DIAGRAM 1

EP 1 613 937 B1

DIAGRAM 2

EP 1 613 937 B1

(i)

8 { 3 7

2 }12

6

5

4    4    28

10

(ii)

8 { 7    3

(iii)

10    28    4

2

# DIAGRAM 3

EP 1 613 937 B1

**DIAGRAM 4**

**DIAGRAM 5**

DIAGRAM 7

DIAGRAM 6

DIAGRAM 10

DIAGRAM 8

DIAGRAM 9

**part 1**

**part 2**

**DIAGRAM 11**

Graph 1: cooling a Standard Burgundy Bottle

Series 1 - base temperature ; series 2 - average temperature (except for point at t = 30 mins where $T_1$ = 22.5 Celsius)

Series1
Series2

Temperature deg C

time (mins )

# Graph 2: Vertical Warming of Standard Burgundy Bottle

Series 1 is the Average temperature ; series 2 is the base temperature

EP 1 613 937 B1

EP 1 613 937 B1

## Graph 3: Horizontal Warming of a standard Burgundy Bottle

Series 1 is the base temperature ; series 2 is the average temperature

Temperature deg C

Time( mins)

Series1
Series2

26

# Graph 4: Cooling of a Champagne bottle

series 1 is the average temperature of the contents of a bottle ; series 2 is the base temperature

EP 1 613 937 B1

# Graph 5: Cooling a Bordeaux Bottle

series 1 is the base temperature ; series 2 is the average temperature of the contents of the bottle

# Graph 6: Cooling of a Condrieu bottle

series 1 is the base temperature ; series 2 is the average temperature of the contents of the bottle

EP 1 613 937 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3124003 A
- US 4104916 A
- US 3864976 A
- US 4538926 A
- US 5738442 A
- WO 8803512 A
- US 20020191673 A
- EP 0332355 A2

**Non-patent literature cited in the description**

- **JANCIS ROBINSON.** Jancis Robinson's Wine Course